# EUROPÄISCHE PATENTANMELDUNG

(11) **EP 4 613 818 A1**
(43) Veröffentlichungstag der Anmeldung: **10.09.2025**
(21) Anmeldenummer: 24161586.3
(22) Anmeldetag: 05.03.2024
(51) Int. Cl.: C09D 1/02, C09D 1/04, C09D 5/00

(54) **BESCHICHTUNGSZUSAMMENSETZUNG UND IHRE VERWENDUNG**

(71) Anmelder: EWALD DÖRKEN AG, 58313 Herdecke (DE)
(72) Erfinder: Walter, Susanne, 58313 Herdecke (DE); Köster, Christopher, 58313 Herdecke (DE); Klüppel, Ingo, 58313 Herdecke (DE); Roth, Marcel, 58313 Herdecke (DE)
(74) Vertreter: Freiherr von Foullon, Alexander

(57) **Zusammenfassung**

Die Erfindung betrifft ein Beschichtungszusammensetzung, welche ein silanmodifiziertes Silikat enthält, sowie ihre Verwendung.

## Beschreibung

Die vorliegende Erfindung betrifft das technische Gebiet der Beschichtungen.

Insbesondere betrifft die vorliegende Erfindung eine wässrige Beschichtungszusammensetzung, insbesondere für Holz- und Bautenschutzfarben.

Darüber hinaus betrifft die Erfindung die Verwendung einer Beschichtungszusammensetzung zur Herstellung von Beschichtungen sowie die erhaltenen Beschichtungen.

Ferner betrifft die Erfindung die Verwendung einer Beschichtungszusammensetzung in medizinischen und kosmetischen Produkten.

Weiterhin betrifft die Erfindung ein Verfahren zur Herstellung einer Beschichtung und ein Verfahren zur Herstellung einer Beschichtungszusammensetzung.

Beschichtungszusammensetzungen werden auf unterschiedlichen Substraten und zu unterschiedlichen Anwendungszwecken eingesetzt, um schützende, dekorative und/oder funktionelle Beschichtungen zu erhalten.

Beschichtungszusammensetzungen werden oftmals in der Form von Lacken; Lasuren oder Farben bereitgestellt und verleihen der beschichteten Oberfläche ihre Struktur bzw. schützen diese vor Umwelteinflüssen.

Im Stand der Technik sind eine Vielzahl von unterschiedlichen Beschichtungszusammensetzungen, insbesondere Farben und Lacken bekannt, welche am Markt erhältlich sind und für Anwendungen in Gebäuden, aber auch im Freien eingesetzt werden.

Farben, Lasuren und Lacke bezeichnen üblicherweise beide flüssige Beschichtungsmittel, welche ein Bindemittel und gegebenenfalls Füllstoffe enthalten. Gelegentlich werden Farben und Lacke an ihrem Bindemittelgehalt unterschieden, wobei Lacke tendenziell einen höheren Bindemittelgehalt aufweisen.

Farben, Lasuren und Lacke lassen sich in wässrige und lösemittelhaltige Systeme aufteilen. Lösemittelhaltige bzw. -basierte Farb-, Lasur- und Lacksysteme weisen oftmals bessere Verarbeitungs- und Trocknungseigenschaften aufgrund der hohen Lösevermögens von organischen Lösemitteln für organische Polymere sowie der oftmals hohen Flüchtigkeit der organischen Lösemittel auf. Lösemittelbasierte Systeme unterliegen aufgrund der potentiellen Gesundheits- und Umweltgefährdung jedoch zunehmend restriktiveren regulatorischen Auflagen und ihre Verwendung wird daher nach Möglichkeit zunehmend vermieden.

Wässrige Systeme weisen die Problematik der Gesundheits- und Umweltgefährdung nicht auf, haben jedoch oftmals den Nachteil einer schwierigeren Applikation und einer längeren Trocknungszeit. Darüber hinaus müssen insbesondere organische Polymere in Form wässriger Dispersionen stabilisiert werden, um gut anwendbare Beschichtungszusammensetzungen zu erhalten.

Wässrige Beschichtungszusammensetzungen lassen sich wiederum in zwei unterschiedliche Arten einteilen, zum einen wasserbasierte Dispersionsbeschichtungszusammensetzungen, insbesondere Dispersionslacke und Dispersionsfarben, welche nach dem Auftragen hervorragend trocknen, elastisch bleiben und daher beispielsweise auch problemlos auf nicht maßhaltige Substrate, wie beispielsweise Holz, aufgebracht werden können. Ein weiterer Vorteil wässriger Dispersionsfarben und -lacke ist, dass sie mit allen gebräuchlichen Pigmenten kompatibel sind und daher in sämtlichen Farbvarianten und -nuancen sowie Farbstärken angeboten werden können.

Wässrig basierte Dispersionsbeschichtungszusammensetzungen haben jedoch den Nachteil, dass die resultierenden Beschichtungen aufgrund der organischen Polymere nur bedingt witterungs- und insbesondere UV-beständig sind. So werden die organischen Polymere unter Einwirkung von UV-Strahlung relativ zügig zerstört, wodurch eine Erneuerung des Anstrichs bzw. der Beschichtung in kurzen Zeitintervallen notwendig wird.

Eine weitere bedeutende Klasse wässriger Beschichtungszusammensetzungen sind mineralische Beschichtungszusammensetzungen, welche ein anorganisches Bindemittel enthalten. Die wichtigsten anorganischen bzw. mineralischen Bindemittelsysteme sind zum einen Kalkfarben und zum anderen Silikatfarben.

Während Kalkfarben aufgrund der geringen Witterungsbeständigkeit nahezu ausschließlich in Innenräumen eingesetzt werden, eignen sich Silikatfarben prinzipiell für eine Vielzahl von Anwendungen, sowohl im Innen- als auch im Außenbereich.

Silikatfarben besitzen ein Bindemittel auf Basis eines Wasserglases, üblicherweise Natriumwasserglas oder Kaliumwasserglas, sowie einen Anteil an Pigmenten. Im Gegensatz zu wässrig basierten Dispersionsbeschichtungszusammensetzungen ist der Pigmentgehalt von Silikatfarben jedoch deutlich geringer und darüber hinaus können aufgrund des stark alkalischen pH-Werts nur alkalibeständige Pigmente verwendet werden, wodurch Silikatfarben nur mit einer eingeschränkten Farbauswahl und auch nur mit geringen Farbstärken angeboten werden können.

Silikatfarben haben jedoch den Vorteil, dass sie insbesondere auf mineralischen oder auf polaren organischen Untergründen, wie beispielsweise Holz, sehr gut haften und teilweise bis zu 1 cm in das Material eindringen. Dort härtet das Silikat aus, was auch als Verkieselung bezeichnet wird, und bildet sowohl innerhalb der Poren des Substarts als auch auf dessen Oberfläche eine starre und äußerst stabile Schutzschicht, welche insbesondere UV- und wasserbeständig ist. Die Eindringtiefe und damit die Imprägnierfähigkeit von Silikatfarben ist jedoch stark vom pH-Wert des Substrats abhängig. In alkalische Materialien kann das Silikat relativ tief eindringen, während es bei sauren Materialien allein auf der Oberfläche verbleibt.

Die besonders starre und stabile Schutzschicht, welche im Rahmen der Verkieselung entsteht, ist zwar einerseits ein Vorteil, kann jedoch andererseits auch auf nicht maßhaltigen Substraten ein Nachteil sein, da die Beschichtung bei Volumenschwankungen des Substrats schnell bricht und in der Folge abblättert.

Zwar ist es möglich, Silikatfarben zur Verbesserung der Elastizität der resultierenden Beschichtung organischer Polymere beizumischen. Die Auswahl der organischen Polymere ist jedoch aufgrund des stark alkalischen pH-Werts der Silikatfarben von 11 bis 12 sehr eingeschränkt, da viele organische Polymere im Alkalischen zersetzt werden. Darüber hinaus ist die Zugabe anorganischer Polymere üblicherweise auf 5 Gew.-% beschränkt, da die Farben nur mit einem Anteil an organischen Verbindungen von höchstens 5 Gew.-% gemäß DIN 18363:2019 als Dispersionssilikatfarben bezeichnet werden dürfen. Echte Hybridbindemittel, welche die Vorteile beider Beschichtungssysteme nutzen, sind jedoch insbesondere auch aufgrund der stark alkalischen Bedingungen nicht bekannt.

Silikat- und Dispersionssilikatfarben weisen eine hohe Salzfracht auf, weshalb in den resultierenden Beschichtungen oftmals osmotische Abläufe beobachtet werden und bei Überlackierung ein Blistererffekt auftritt

Darüber hinaus zeigen sowohl Silikat- als auch Dispersionssilikatfarben das Phänomen der Carbonatisierung, d.h. der Aufnahme von Kohlenstoffdioxid unter Bildung von Alkalimetallcarbonaten und somit letztlich der Abwitterung. Selbst in Innenräumen können somit keine langzeitstabilen Beschichtungen erhalten werden. Dieser Effekt ist insbesondere bei Verwendung von Lithiumpolysilikaten besonders ausgeprägt, wobei Lithiumcarbonat gebildet wird.

Als weitere anorganische Beschichtungssysteme sind außerdem Nanopartikelbeschichtungen auf Basis von Zirkondioxid oder Titandioxid bekannt. Diese Beschichtungen sind jedoch sehr kostenintensiv und müssen bei hohen Temperaturen eingebrannt werden, wenn keine zusätzlichen Additive oder Polymere angewendet werden sollen.

Auch werden gelegentlich Silane und Silanhydrolysate zur Beschichtung von Oberflächen eingesetzt. Diese sind jedoch bereits in der Beschaffung sowie der Herstellung kostenintensiv und müssen zunächst aufwendig hydrolysiert und der entstehende Alkohol entfernt werden, weshalb silanbasierte Beschichtungen nur ein Nischendasein führen.

Die WO 2016/107791 A1 beschreibt eine Passivierungszusammensetzung auf Basis silanmodifizierter Silane, welche mit einer Schichtdicke von 1 bis 550 nm auf metallische Substrate aufgebracht wird. Beschichtungszusammensetzungen für Farben und Lacke sind nicht beschrieben.

Es fehlt im Stand der Technik somit weiterhin an einem mineralischen Bindemittelsystem, welches flexibel einsetzbar und mit einer Vielzahl von Pigmenten mischbar ist.

Darüber hinaus fehlt es weiterhin an einem Bindemittelsystem und einer Beschichtungszusammensetzung, in welcher mineralische und organische Bindemittel in nahezu beliebigen Konzentrationen gemischt werden können, je nach Anwendungszweck und den vorgesehenen Anforderungen und dies für Anwendungen sowohl im Innen- als auch im Außenbereich.

Darüber hinaus fehlt es im Stand der Technik weiterhin an universell einsetzbaren anorganischen Bindemittelsystemen für Beschichtungszusammensetzungen, insbesondere Anstrichmittel.

Eine Aufgabe der vorliegenden Erfindung ist somit darin zu sehen, die zuvor genannten, mit dem Stand der Technik verbundenen Nachteile zu vermeiden, zumindest jedoch abzuschwächen.

Insbesondere ist eine Aufgabe der vorliegenden Erfindung, ein wässriges Bindemittelsystem bzw. eine wässrige Beschichtungszusammensetzung auf Basis eines anorganischen Bindemittels bereitzustellen, welches universell einsetzbar, insbesondere mit nahezu allen handelsüblichen Pigmenten mischbar, ist.

Darüber hinaus ist eine weitere Aufgabe der vorliegenden Erfindung darin zu sehen, ein anorganisches Bindemittelsystem und entsprechende Beschichtungszusammensetzungen bereitzustellen, welche flexibel, insbesondere im Hinblick auf ihren pH-Wert, an den jeweiligen Anwendungszweck, angepasst werden können.

Weiterhin ist eine weitere Aufgabe der vorliegenden Erfindung, ein anorganisches Bindemittelsystem und entsprechende Beschichtungszusammensetzungen zur Verfügung zu stellen, welche die Bereitstellung von anorganisch-organischen Hybrid-Bindemittelsystemen ermöglichen.

Gegenstand der vorliegenden Erfindung - gemäß einem ersten Aspekt der vorliegenden Erfindung - ist somit eine wässrige Beschichtungszusammensetzung nach Anspruch 1; weitere, vorteilhafte Ausgestaltungen dieses Erfindungsaspekts sind Gegenstand der diesbezüglichen Unteransprüche.

Weiterer Gegenstand der vorliegenden Erfindung - gemäß einem zweiten Aspekt der vorliegenden Erfindung - ist eine Beschichtungszusammensetzung nach Anspruch 13.

Weiterer Gegenstand der vorliegenden Erfindung - gemäß einem dritten Aspekt der vorliegenden Erfindung - ist die Verwendung einer wässrigen Beschichtungszusammensetzung nach Anspruch 14.

Weiterer Gegenstand der vorliegenden Erfindung - gemäß einem vierten Aspekt der vorliegenden Erfindung - ist die Verwendung einer wässrigen Beschichtungszusammensetzung nach Anspruch 15.

Weiterer Gegenstand der vorliegenden Erfindung - gemäß einem fünften Aspekt der vorliegenden Erfindung - ist die Verwendung einer wässrigen Beschichtungszusammensetzung nach Anspruch 16.

Weiterer Gegenstand der vorliegenden Erfindung - gemäß einem sechsten Aspekt der vorliegenden Erfindung - ist die Verwendung einer wässrigen Beschichtungszusammensetzung nach Anspruch 17.

Weiterer Gegenstand der vorliegenden Erfindung - gemäß einem siebten Aspekt der vorliegenden Erfindung - eine Beschichtungszusammensetzung nach Anspruch 18.

Wiederum weiterer Gegenstand der vorliegenden Erfindung - nach einem achten Aspekt der vorliegenden Erfindung - ist ein Verfahren zur Beschichtung eines Substrats nach Anspruch 19; weitere, vorteilhafte Ausgestaltungen dieses Erfindungsaspekts sind Gegenstand des diesbezüglichen Unteranspruchs.

Wiederum weiterer Gegenstand der vorliegenden Erfindung - gemäß einem neunten Aspekt der vorliegenden Erfindung - ist eine Beschichtung nach Anspruch 21.

Schließlich ist wiederum weiterer Gegenstand der vorliegenden Erfindung - gemäß einem zehnten Aspekt der vorliegenden Erfindung - ein Verfahren zur Herstellung einer Beschichtungszusammensetzung nach Anspruch 22.

Es versteht sich von selbst, dass Besonderheiten, Merkmale, Ausgestaltungen und Ausführungsformen sowie deren Vorteile oder dergleichen, welche nachfolgend - zu Zwecken der Vermeidung von unnötigen Wiederholungen - nur zu einem Erfindungsaspekt ausgeführt werden, selbstverständlich in Bezug auf die übrigen Erfindungsaspekte entsprechend gelten, ohne dass es einer ausdrücklichen Erwähnung bedarf.

Zudem gilt, dass bei allen nachstehend genannten relativen bzw. prozentualen, insbesondere gewichtsbezogenen Mengenangaben zu beachten ist, dass diese im Rahmen der vorliegenden Erfindung vom Fachmann derart auszuwählen sind, dass in der Summe der Inhaltsstoffe, Zusatz- bzw. Hilfsstoffe oder dergleichen stets 100 % bzw. 100 Gew.-%, resultieren. Dies versteht sich für den Fachmann aber von selbst.

Zudem gilt, dass alle im Folgenden genannten Parameterangaben oder dergleichen grundsätzlich mit genormten oder explizit angegebenen Bestimmungsmethoden oder aber mit dem Fachmann an sich geläufigen Bestimmungsverfahren bestimmt bzw. ermittelt werden können.

Dies vorausgeschickt wird nachfolgend der Gegenstand der vorliegenden Erfindung näher erläutert.

Gegenstand der vorliegenden Erfindung - gemäß einem **ersten** Aspekt der vorliegenden Erfindung - ist eine wässrige Beschichtungszusammensetzung, insbesondere für Holz- und Bautenschutzfarben, wobei die Beschichtungszusammensetzung ein silikatbasiertes Bindemittel aufweist, wobei das silikatbasierte Bindemittel ein silanmodifizertes Silikat enthält, wobei das silanmodifizerte Silikat durch Hydrolyse eines Silans in Gegenwart eines Silikats bei einem basischen pH-Wert erhalten wird.

Die erfindungsgemäße wässrige Beschichtungszusammensetzung zeichnet sich insbesondere dadurch aus, dass der pH-Wert der Beschichtungszusammensetzung im Bereich von pH 1 bis pH 14 einstellbar ist.

Im Rahmen der vorliegenden Erfindung ist es üblicherweise vorgesehen, dass das silikatbasierte Bindemittel bzw. das silanmodifizerte Silikat durch zumindest teilweise Hydrolyse und ggf. zumindest teilweise Kondensation mindestens eines Silans in Gegenwart mindestens eines Silikats bei einem basischen pH-Wert erhalten wird. Vorzugsweise ist das Silan vollständig hydrolysiert.

Durch die zumindest teilweise, vorzugsweise vollständige, Hydrolyse des Silans in Gegenwart des Silikats wird das silanmodifizierte Silikat erhalten.

Vorzugsweise ist das silanmodifizierte Silikat das silikatbasierte Bindemittel bzw. besteht das silikatbasierte Bindemittel aus dem silanmodifizierten Silikat.

Gemäß einer bevorzugten Ausführungsform der vorliegenden Erfindung ist es vorgesehen, dass das silikatbasierte Bindemittel bzw. das silanmodifizierte Silikat durch Hydrolyse und zumindest teilweise Kondensation eines Silans in Gegenwart eines Silikats bei einem basischen pH-Wert erhalten wird.

Durch die Verwendung eines silanmodifizierten Silikats als silikatbasiertes Bindemittel oder in silikatbasierten Bindemitteln ist möglich, wässrige Beschichtungszusammensetzungen zu erhalten, deren pH-Wert flexibel eingestellt werden kann. Es hat sich überraschenderweise gezeigt, dass nach erfolgter Hydrolyse und ggf. Kondensation des Silans in Gegenwart eines Silikats bei einem basischen pH-Wert das resultierende silanmodifizierte Silikat auch bei pH-Werten im neutralen Bereich oder sogar im sauren Bereich stabil ist und gerade nicht ausfällt, wie dies beispielsweise bei unmodifizierten Wassergläsern der Fall ist.

So kann der pH-Wert der erfindungsgemäßen Beschichtungszusammensetzung zur Erhöhung der Kompatibilität mit weiteren Inhaltsstoffen und erhöhter Lagerstabilität gezielt eingestellt werden. Beispielsweise können Co-Bindemittel, insbesondere auch sauer stabilisierte Co-Bindemittel, wie kationische Polymere oder Silane, in der Beschichtungszusammensetzung eingesetzt werden. Auch können Verbindungen, die im Sauren oder Basischen hydrolysieren und ggf. kondensieren, stabil als Monomer in die erfindungsgemäße Beschichtungszusammensetzung eingebracht werden.

Darüber hinaus können funktionale Additive, wasserlösliche instabile Verbindungen, wie beispielsweise Vitamine oder Wirkstoffe für kosmetische oder pharmazeutische Anwendungen, Farbstoffe oder pH-empfindliche Katalysatoren lagerstabil in die erfindungsgemäße Beschichtungszusammensetzung eingearbeitet werden.

Die Eigenschaften der erfindungsgemäße Beschichtungszusammensetzung können über Auswahl der eingesetzten Silane in weiten Bereichen eingestellt werden, insbesondere über die funktionellen Gruppen der Silane, wobei sogar eine Anbindung von Additiven, wie beispielsweise UV-Filtern, möglich ist. Diese Additive werden dann nicht wie herkömmliche Additive aus den Beschichtungen ausgewaschen, sondern sind immobilisiert.

Darüber hinaus ermöglicht die vorliegende Erfindung im Vergleich zu Silanhydrolysaten einen zumindest teilweisen Ersatz des teuren Silans durch den günstigen Rohstoff Wasserglas, wobei die guten Anwendungseigenschaften der Silane bzw. Silanhydrolysate erhalten bleiben.

Darüber hinaus wird die durch die Verwendung eines silanmodifizierten Silikats die Salzfracht im Vergleich zu Silikatfarben verringert, wodurch osmotische Effekte unterdrückt oder zumindest verringert werden und auch ein Blistern bei Überlackierung nicht beobachtet wird. Gleichzeitig wird der organische Anteil gegenüber reinen Silanen und Silanhydrolysaten verringert, wodurch auch die Entstehung von Mikroplastik bei Verwitterung vermieden oder zumindest verringert wird.

Die erfindungsgemäße Beschichtungszusammensetzung bietet die Möglichkeit, eine wässrige Beschichtungszusammensetzung, beispielsweise in Bauten- oder Holzschutzbeschichtungen oder auch in Korrosionsschutzbeschichtungen, bereitzustellen, deren pH-Wert derart angepasst werden kann, dass Pigmente, beispielsweise Farbpigmente oder auch Korrosionsschutzpigmente, stabil in einer wässrigen Beschichtungszusammensetzung eingearbeitet und in dieser gelagert werden können.

Unter stabil ist dabei zu verstehen, dass die Beschichtungszusammensetzung über einen Zeitraum von mindestens drei Monaten, vorzugsweise mindestens vier Monaten, bevorzugt mindestens sechs Monaten stabil ist, d.h. sich in ihren chemischen und/oder physikalischen Eigenschaften nicht oder zumindest nicht wesentlich ändert.

Gleichermaßen kann es im Rahmen der vorliegenden Erfindung vorgesehen sein, dass die Beschichtungszusammensetzung über einen Zeitraum von drei Monaten bis 24 Monaten, insbesondere 4 Monaten bis 20 Monaten, vorzugsweise 6 Monaten bis 18 Monaten, stabil ist.

Unter einem silanmodifizierten Silikat ist im Rahmen der vorliegenden Erfindung ein Silikat zu verstehen, in dessen Gegenwart mindestens ein Silan zumindest teilweise hydrolysiert und ggf. kondensiert wurde. Es ist bislang noch nicht geklärt, welcher Art die Wechselwirkung zwischen hydrolysiertem Silan und Silikat letztendlich ist. Das hydrolysierte Silan scheint jedoch zumindest teilweise an die Silanolfunktionen des Silikats zu binden. Die Wechselwirkung zwischen Silan und Silikat zeigt sich insbesondere daran, dass Lösungen des silanmodifizierten Silikats problemlos angesäuert werden können, während aus basischen Lösungen von Silikaten, insbesondere Wassergläsern, beim Ansäuren amorphe Feststoffe ausgefällt werden. Auch Gemische von vorkondensierten Silanen und Silikaten zeigen nicht das Verhalten der erfindungsgemäß verwendeten silanmodifizierten Silikate, sondern führen während des Ansäuerns auch zur Bildung von Niederschlägen.

Neben der Verwendbarkeit einer großen Auswahl an Pigmenten bietet die erfindungsgemäße wässrige Beschichtungszusammensetzung, insbesondere die Verwendung eines silanmodifizierten Silikats, auch den Vorteil, dass nahezu beliebige Hybridbindemittel bereitgestellt werden können. Unter einem Hybridbindemittel ist im Rahmen der vorliegenden Erfindung eine Mischung aus einem organischen Bindemittel und dem silanmodifizierten Silikat zu verstehen. Da wässrige Zusammensetzungen, welche das erfindungsgemäß verwendete silanmodifizierte Silikat enthalten, beliebig in den pH-Werten eingestellt werden können, kann das silanmodifizierte Silikat auch mit nahezu beliebigen organischen Bindemitteln kombiniert werden. Auf diese Weise können die Vorteile organischer Bindemittelsysteme, nämlich hohe Elastizität und Bindungsvermögen für Farbpigmente, mit den Vorteilen eines anorganischen Systems, nämlich eine hohe Imprägnierfähigkeit von polaren Substraten, insbesondere mineralischen Substraten oder holzbasierten Substraten, sowie mechanisch sehr belastbare und beständige Beschichtungen kombiniert werden.

Die erfindungsgemäße Beschichtungszusammensetzung lässt sich in hervorragender Weise auf den pH-Wert des zu beschichtenden Substrats stellen. Somit können mit der erfindungsgemäßen Beschichtungszusammensetzung auch ohne Weiteres holzhaltige Substrate, insbesondere auch relativ saure Holzsorten wie Eiche, Edelkastanie oder Douglasie mit pH-Werten unter 5, beschichtet werden, wobei es durch die Einstellung eines neutralen oder sauren pH-Werts möglich ist, dass das silanmodifizierte Silikat tief in die Poren des Holzes eindringt. Die erfindungsgemäße Beschichtungszusammensetzung eignet sich somit in hervorragender Weise sowohl für dekorative Beschichtungen als auch für schützende Beschichtungen, insbesondere für Holz- oder Bautenschutzfarben, welche im Außenbereich angewendet werden.

Die erfindungsgemäße Beschichtungszusammensetzung ist vorzugsweise eine Beschichtungszusammensetzung zur Erzeugung von Korrosionsschutzbeschichtungen, Holzschutzbeschichtungen oder Bautenschutzbeschichtungen, vorzugsweise von Holzschutzbeschichtungen oder Bautenschutzbeschichtungen. Die Beschichtungszusammensetzung kann allgemein auf polaren Oberflächen, wie Holz, Metall, Glas, weiteren Beschichtungen oder mineralischen Oberflächen angewendet werden und steigert die Belastbarkeit und Kratzfestigkeit der Oberfläche und kann Poren und Risse in der Oberfläche füllen.

Darüber hinaus kann die erfindungsgemäße Beschichtungszusammensetzung auf zur Beschichtung von Medizinprodukten, wie beispielsweise Implantaten oder Wundauflagen eingesetzt werden, oder in kosmetischen oder medizinischen Produkten zur Erzeugung schützender Beschichtungen. Weiterhin kann die erfindungsgemäße Beschichtungszusammensetzung auch zur Beschichtung von biologischen Systemen wie Holz, Zähnen oder Knochengewebe eingesetzt werden.

Unter einem Bindemittel, auch Binder genannt, ist im Rahmen der vorliegenden Erfindung eine Substanz oder eine Kombination verschiedener Substanzen zu verstehen, welche weitere Komponenten der Beschichtungszusammensetzung zu binden sowie Verbindungen zum Substrat herzustellen vermag. Allgemein sind Bindemittel Stoffe, die an den Phasengrenzen anderer Stoffe chemische Bindungen herstellen oder begünstigen oder Effekte wie Kohäsion, Adsorption und Adhäsion bzw. Reibung auslösen oder vergrößern. Sie verbinden Stoffe, indem sie sie aufnehmen, anlagern, zusammenhalten, vernetzen oder verkleben.

Im Rahmen der vorliegenden Erfindung ist es insbesondere vorgesehen, dass die Beschichtungszusammensetzung einen pH-Wert im Bereich von 1 bis 14, insbesondere 2 bis 11, vorzugsweise 4 bis 10, bevorzugt 5 bis 9, aufweist. Der pH-Wert der erfindungsgemäßen Beschichtungszusammensetzung kann aufgrund der Verwendung des silanmodifizierten Silikats spezifisch auf die weiteren Bestandteile der Beschichtungszusammensetzung, wie beispielsweise Füllstoffe, Co-Bindemittel. Wirkstoffe, Additive oder Metallpigmente abgestimmt werden. Insbesondere ist es möglich, den pH-Wert auf das Redoxpotential von Metallpartikeln sowie deren Passivierungseigenschaften abzustimmen, so dass diese über einen langen Zeitraum stabil in der Beschichtungszusammensetzung gelagert werden können.

Durch die Verwendung silanmodifizierter Silikatverbindungen bzw. silanmodifizierter Wassergläser wird gleichfalls keine Carbonatisierung beobachtet, wenn der pH-Wert der Beschichtungszusammensetzung auf Werte kleiner oder gleich 9, vorzugsweise kleiner oder gleich 8,5 eingestellt ist, wobei trotz der Absenkung des pH-Werts das Silkat nicht ausfällt. Die pH-Werteinstellung kann dabei durch Zugeben von Säuren erfolgen. Eine Verwendung der silanmodifizierten Silikatverbindungen bzw. der silanmodifizierten Wassergläser im neutralen oder sauren pH-Bereich ist bevorzugt, insbesondere da im sauren Bereich die Absorption von Kohlenstoffdioxid in Form von Carbonaten deutlich reduziert ist.

Die pH-Werteinstellung kann dabei insbesondere durch Zugabe von organischen und/oder anorganischen Säuren, vorzugsweise anorganischen Säuren, erfolgen. Es hat sich bewährt, wenn die Säure ausgewählt ist aus der Gruppe von Phosphorsäure, Phosphonsäure, organischen Phosphonsäuren, Salpetersäure, Schwefelsäure, Essigsäure, Zitronensäure, Propansäure, Acrylsäure, Oxalsäure, Fumarsäure, Benzoesäure, Bernsteinsäure, Maleinsäure, Salicylsäure, Aminosalicylsäure, Nicotinsäure, Ameisensäure, Apfelsäure, Weinsäure, Ascorbinsäure, Propansäure, Milchsäure, Phthalsäure und deren Mischungen, insbesondere Phosphorsäure, Phosphonsäure, organischen Phosphonsäuren, Salpetersäure, Schwefelsäure, Essigsäure, Zitronensäure, Propansäure, un deren Mischungen, vorzugsweise Phosphorsäure, Phosphonsäure, Salpetersäure und deren Mischungen, bevorzugt Phosphorsäure, Phosphonsäure, organischen Phosphonsäuren und deren Mischungen.

Gemäß einer besonderen Ausführungsform der Erfindung kann die Säure ausgewählt sein aus der Gruppe von Essigsäure, Propansäure, Acrylsäure, Oxalsäure, Zitronensäure, Fumarsäure, Benzoesäure, Bernsteinsäure, Maleinsäure, Salicylsäure, Aminosalicylsäure, Nicotinsäure, Ameisensäure, Apfelsäure, Weinsäure, Ascorbinsäure, Propansäure, Milchsäure, Phthalsäure und deren Mischungen.

Im Rahmen der vorliegenden Erfindung ist es üblicherweise vorgesehen, dass das Silikat des silikatbasierten Bindemittels bzw. des silanmodifizierten Silikats ein Wasserglas ist.

Im Rahmen der vorliegenden Erfindung wird es bevorzugt, wenn das Wasserglas ausgewählt ist aus der Gruppe von Lithiumwasserglas, Natriumwasserglas, Kaliumwasserglas und deren Mischungen. Besonders gute Ergebnisse werden im Rahmen der vorliegenden Erfindung erhalten, wenn das Wasserglas ausgewählt ist aus der Gruppe von Natriumwasserglas, Kaliumwasserglas und deren Mischungen.

Besonders bevorzugt wird es im Rahmen der vorliegenden Erfindung, wenn das Wasserglas Kaliumwasserglas ist.

Was nun das verwendete Silan anbelangt, so kann auch dieses aus einer Vielzahl geeigneter Silane ausgewählt werden. Im Rahmen der vorliegenden Erfindung hat es sich jedoch bewährt, wenn das Silan des silikatbasierten Bindemittels bzw. des silanmodifizierten Silikats ausgewählt ist aus der Gruppe von epoxyfunktionellen Silanen, phenoxyfunktionellen Silanen, vinylfunktionellen Silanen, aminofunktionellen Silanen und deren Mischungen, vorzugsweise epoxyfunktionellen Silanen, aminofunktionellen Silanen und deren Mischungen.

Weiterhin ist es im Rahmen der vorliegenden Erfindung vorzugsweise vorgesehen, dass das Silan mindestens eine hydrolysierbare chemische Gruppe, vorzugsweise eine unmittelbar an das Silizium gebundene hydrolysierbare chemische Gruppe, aufweist. Die hydrolysierbare chemische Gruppe ist vorzugsweise ausgewählt aus Alkoxygruppen, Carboxygruppen, Halogeniden und deren Mischungen. Bevorzugt ist die hydrolysierbare chemische Gruppe ausgewählt aus der Gruppe von Methoxygruppe, Ethoxygruppe, Propoxygruppe, iso-Propoxygruppe, Butoxygruppe, Acetoxygruppe, Chlorid und deren Mischungen, insbesondere Methoxygruppe, Ethoxygruppe und deren Mischungen.

Die vorgenannten Silane erlauben insbesondere eine gute Haftung sowohl an den verwendeten Substraten als auch an etwaigen weiteren aufzubringenden Schichten.

Im Rahmen der vorliegenden Erfindung hat es sich besonders bewährt, wenn das Silan ausgewählt ist aus der Gruppe von Methacryloxymethyltrimethoxysilan, Methacryloxymethyltriethoxysilan, 3-Aminopropylmethyldimethoxysilan, 3-Aminopropyltriethoxysilan, N-(2-Aminoethyl)-3-aminopropylmethyldimethoxysilan, 3-Mercaptopropyltrimethoxysilan, N-(2-Aminoethyl)-3-aminopropyltrimethoxysilan, N-(2-Aminoethyl)-3-aminopropyltrimethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)propyltriethoxysilan, N-(2-Aminoethyl)-3-aminopropylmethyldimethoxysilan, 3-Aminopropyltrimethoxysilan, 3-Ureidopropyltrimethoxysilan, Vinyltrimethoxysilan, Vinyldimethoxymethylsilan, Vinyltriethoxysilan, Vinyltriacetoxysilan, 3-Methacryloxypropyltrimethoxysilan, Methacryloxymethyl)methyldimethoxysilan, Methacryloxymethyltrimethoxysilan, 3-Methacryloxypropyltriacetoxysilan, N-Methyl[3-(Trimethoxysilyl)propyl]carbamat, N-Trimethoxysilylmethyl-O-methylcarbamat, N-Dimethoxy(methyl)silylmethyl-O-methylcarbamat, Tris-[3-(trimethoxysilyl)propyl]-isocyanurat, 3-Glycidoxypropyltrimethoxysilan, 3-Glycidoxypropyltriethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan, (Cyclohexyl)methyldimethoxysilan, Dicyclopentyldimethoxysilan, Phenyltriethoxysilan, Triacetoxyethylsilan, 1,2-Bis(triethoxysilyl)-ethan und deren Mischungen.

Besonders gute Ergebnisse werden erhalten, wenn das Silan ausgewählt ist aus der Gruppe von 3-Aminopropylmethyldimethoxysilan, 3-Aminopropyltriethoxysilan, N-(2-Aminoethyl)-3-aminopropylmethyldimethoxysilan, N-(2-Aminoethyl)-3-aminopropyltrimethoxysilan, N-(2-Aminoethyl)-3-aminopropyltriethoxysilan, N-Cyclohexyl-3-aminopropyltrimethoxysilan, N-Cyclohexylaminomethyltriethoxysilan, 3-Aminopropyltriethoxysilan, 3-(2-Aminomethylamino)propyltriethoxysilan, N-(2-Aminoethyl)-3-aminopropylmethyldimethoxysilan, 3-Aminopropyltrimethoxysilan, Glycidoxypropyltrimethoxysilan, 3-Glycidoxypropyltriethoxysilan und deren Mischungen, vorzugsweise N-(2-Aminoethyl)-3-aminopropyltrimethoxysilan, N-(2-Aminoethyl)-3-aminopropyltriethoxysilan, Glycidoxypropyltrimethoxysilan, 3-Glycidoxypropyltriethoxysilan und deren Mischungen.

Im Rahmen der vorliegenden Erfindung ist es üblicherweise vorgesehen, dass die Beschichtungszusammensetzung das silikatbasierte Bindemittel in Mengen von 1 bis 40 Gew.-%, insbesondere 1 bis 30 Gew.-%, vorzugsweise 2 bis 20 Gew.-%, bevorzugt 3 bis 15 Gew.-%, besonders bevorzugt 4 bis 10 Gew.-%, bezogen auf die Beschichtungszusammensetzung, aufweist. Der Anteil an silikatbasiertem Bindemittel gibt jeweils den Feststoffanteil des silikatbasierten Bindemittels in der Beschichtungszusammensetzung an.

Gleichermaßen kann es vorgesehen sein, dass die Beschichtungszusammensetzung das silikatbasierte Bindemittel in Mengen von mindestens 1 Gew.-%, insbesondere mindestens 2 Gew.-%, vorzugsweise mindestens 3 Gew.-%, bevorzugt mindestens 4 Gew.-%, bezogen auf die Beschichtungszusammensetzung, aufweist.

Darüber hinaus kann es auch vorgesehen sein, dass die Beschichtungszusammensetzung das silikatbasierte Bindemittel in Mengen von höchstens 40 Gew.-%, insbesondere höchstens 30 Gew.-%, vorzugsweise höchstens 20 Gew.-%, bevorzugt höchstens 15 Gew.-%, besonders bevorzugt höchstens 10 Gew.-%, bezogen auf die Beschichtungszusammensetzung, aufweist.

Gemäß einer bevorzugten Ausführungsform der vorliegenden Erfindung ist es vorgesehen, dass die Beschichtungszusammensetzung mindestes ein weiteres Bindemittel aufweist.

Das weitere Bindemittel kann dabei ein anorganisches und/oder ein organisches Bindemittel sein. Bevorzugt wird im Rahmen der vorliegenden Erfindung als weiteres Bindemittel jedoch ein organisches Bindemittel eingesetzt.

In diesem Zusammenhang wird es bevorzugt, wenn ein Hybridbindemittelsystem aus silikatbasiertem Bindemittel, insbesondere silanmodifiziertem Silikat, und organischem Bindemittel eingesetzt wird.

Als anorganische Bindemittel können insbesondere Bindemittel auf Basis von Silanen, Silikaten, Kieselsäuren oder auch Titanaten eingesetzt werden.

Im Rahmen der vorliegenden Erfindung hat es sich bewährt, wenn das weitere, insbesondere organische Bindemittel, ein organisches Polymer aufweist. Vorzugsweise besteht das weitere, insbesondere organische Bindemittel, aus dem organischen Polymer bestehen. Es hat sich bewährt, wenn das organische Polymer ausgewählt ist aus der Gruppe von Acrylaten, Styrol-Acrylat-Copolymeren, Epoxiden, Alkyden, Polyurethanen, Polyvinylacetat, Polyvinylalkohol, Ethylcellulose, Carboxymethylcellulose, Polyvinylpyrrolidon, Polyvinylbutyral und deren Mischungen und Copolymeren. Vorzugsweise ist das Polymer ausgewählt ist aus der Gruppe von Acrylaten, Styrol-Acrylat-Copolymeren, Epoxiden, Alkyden, Polyurethanen, Polyvinylacetat, Polyvinylalkohol und deren Mischungen und Copolymeren.

Bevorzugt ist das Polymer ausgewählt aus der Gruppe von Acrylaten, Alkyden, Polyurethanen und deren Mischungen und Copolymeren, insbesondere von Acrylaten und Acrtylatcopolymeren. Besonders gute Ergebnisse werden im Rahmen der vorliegenden Erfindung erhalten, wenn das Polymer ein Acrylat ist.

Für den Fall, dass die Beschichtungszusammensetzung ein weiteres Bindemittel enthält, so ist es üblicherweise vorgesehen, dass die Beschichtungszusammensetzung das weitere Bindemittel in Mengen von 1 bis 30 Gew.-%, insbesondere 1 bis 20 Gew.-%, vorzugsweise 2 bis 15 Gew.-%, bevorzugt 3 bis 10 Gew.-%, besonders bevorzugt 3 bis 8 Gew.-%, bezogen auf die Beschichtungszusammensetzung, aufweist.

Gleichermaßen kann es im Rahmen der vorliegenden Erfindung vorgesehen sein, dass die Beschichtungszusammensetzung das weitere Bindemittel in Mengen von mindestens 1 Gew.-%, insbesondere mindestens 2 Gew.-%, vorzugsweise mindestens 3 Gew.-%, bezogen auf die Beschichtungszusammensetzung, aufweist.

Darüber hinaus ist es jedoch auch möglich, dass die Beschichtungszusammensetzung das weitere Bindemittel in Mengen von höchstens 30 Gew.-%, insbesondere höchstens 20 Gew.-%, vorzugsweise höchstens 15 Gew.-%, bevorzugt höchstens 10 Gew.-%, besonders bevorzugt höchstens 8 Gew.-%, bezogen auf die Beschichtungszusammensetzung, aufweist. Die Angaben geben jeweils den Feststoffanteil des weiteren Bindemittels an der Beschichtungszusammensetzung an.

Gemäß einer besonderen Ausführungsform der vorliegenden Erfindung enthält die Beschichtungszusammensetzung ein organisches Bindemittel in Mengen von höchstens 5 Gew.-%, insbesondere 2 bis 5 Gew.-%, bezogen auf die Beschichtungszusammensetzung. Beschichtungszusammensetzungen mit einem deratig geringen Anteil an organischem Bindemittel dürfen gemäß DIN 18363:2019 als Dispersionssilikatfarbe bezeichnet werden.

Wie zuvor bereits ausgeführt, ist die erfindungsgemäße Beschichtungszusammensetzung eine wässrige Beschichtungszusammensetzung.

Der Anteil an Wasser, welcher in der Beschichtungszusammensetzung enthalten ist, kann dabei je nach Art des vorgesehenen Einsatzzweckes in weiten Bereichen variieren. Üblicherweise enthält die Beschichtungszusammensetzung Wasser in Mengen von mindestens 3 Gew.-%, insbesondere mindestens 5 Gew-%, vorzugsweise mindestens 7 Gew.-%, bevorzugt mindestens 8 Gew.-%, besonders bevorzugt mindestens 10 Gew.-%, bezogen auf die Beschichtungszusammensetzung.

Weiterhin kann es vorgesehen sein, dass die Beschichtungszusammensetzung Wasser in Mengen von bis zu 60 Gew.-%, insbesondere bis zu 50 Gew-%, vorzugsweise bis zu 40 Gew.-%, bevorzugt bis zu 30 Gew.-%, bezogen auf die Beschichtungszusammensetzung, aufweist.

Gemäß einer bevorzugten Ausführungsform der vorliegenden Erfindung ist es vorgesehen, dass die Beschichtungszusammensetzung Wasser in Mengen von 3 bis 60 Gew.-%, insbesondere 5 bis 50 Gew-%, vorzugsweise 7 bis 40 Gew.-%, bevorzugt 8 bis 30 Gew.-%, besonders bevorzugt 10 bis 20 Gew.-%, bezogen auf die Beschichtungszusammensetzung, aufweist.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) Wasser, insbesondere in Mengen von 3 bis 60 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) ein weiteres, insbesondere organisches, Bindemittel, insbesondere in Mengen von 1 bis 30 Gew.-%
(c) Wasser, insbesondere in Mengen von 3 bis 60 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Gemäß einer bevorzugten Ausführungsform der vorliegenden Erfindung ist es vorgesehen, dass die Beschichtungszusammensetzung mindestens ein Pigment aufweist.

Unter einem Pigment ist im Rahmen der vorliegenden Erfindung vorzugsweise ein Farbmittel zu verstehen, welches im Anwendungsmedium praktisch unlöslich als Feststoffteilchen vorliegt. Pigmente werden oftmals nach ihren Einsatzzwecken benannt, beispielsweise Effektpigment oder auch Weißpigment. Pigmente bestehen entweder aus anorganischen Materialien oder aus organischen Materialien und werden als anorganische oder organische Pigmente bezeichnet. Sowohl anorganische als auch organische Pigmente können entweder natürlichen Ursprungs sein oder synthetisch hergestellt werden.

Üblicherweise ist das Pigment ausgewählt aus der Gruppe von organischen Pigmenten, anorganischen Pigmenten und deren Mischungen.

Im Allgemeinen ist das im Rahmen der vorliegenden Erfindung eingesetzte Pigment ausgewählt aus der Gruppe von organischen und/oder anorganischen Pigmenten, insbesondere Pigmentrußen, Metalloxiden, insbesondere Oxiden von Titan, Zink, Eisen und/oder Cer, sowie deren Mischungen.

Geeignete organische Pigmente umfassen beispielsweise Nitroso-, Nitro-, Azo-, Xanthen-, Chinolin-, Anthrachinon-, Phthalocyanin-, Metallkomplex-, Isoindolinon-, Isoindolin-, Chinacridon-, Perinon-, Perylen-, Diketopyrrolopyrrol-, Thioindigo-, Dioxazin-, Triphenylmethan- und Chinophthalonverbindungen. Des Weiteren können die organischen Pigmente beispielsweise ausgewählt sein aus: Carmine, Carbon Black, Anilinschwarz, Azogelb, Chinacridon, Phthalocyaninblau. Beispiele hierfür sind: PY 74, PY 65, PY 110, PR 112, PR 122, PR 254, PR 168, PO 5, PG 7, PB 15:1, PB 15:2, PB 15:3, PB 15:4 und PBk 7.

Geeignete anorganische Pigmente umfassen beispielsweise Metalloxide bzw. andere in Wasser schwerlösliche oder insbesondere zumindest im Wesentlichen unlösliche Metallverbindungen, insbesondere Oxide von Titan, beispielsweise Titandioxid (CI 77891), Zink, Eisen, beispielsweise rotes und schwarzes Eisenoxid (CI 77491 (rot), 77499 (schwarz)) oder Eisenoxidhydrat (CI 77492, gelb), Zirkonium, Silizium, Mangan, Aluminium, Cer, Chrom sowie Mischoxide der genannten Elemente und deren Mischungen. Weitere geeignete Pigmente sind Bariumsulfat-, Zinksulfid-, Manganviolett-, Ultramarinblau- und Berliner Blau-Pigmente sowie Pigmentruße. Die Pigmente können oberflächenmodifiziert sein, wobei die Oberflächen durch die Modifizierung beispielsweise hydrophile, amphiphile oder hydrophobe Verbindungen bzw. Gruppen aufweisen können. Insbesondere können die anorganischen Pigmente PR 101, PY 42, Pb 28, Pb 29, PW 6 und Pbk 33 eingesetzt werden. Die Oberflächenbehandlung kann darin bestehen, dass die Pigmente nach für den Fachmann bekannten Verfahren mit einer dünnen hydrophilen und/oder hydrophoben anorganischen bzw. organischen Schicht versehen werden.

Im Rahmen der vorliegenen Erfindung hat es sich jedoch bewährt, wenn das Pigment ausgewählt ist aus der Gruppe von Titandioxid, Eisenoxidgelb, Eisenoxidrot, Bismutvanadat, Rußschwarz, Toluidinrot, Phthalocyanin, Phthalocyaninblau, Monoazogelb, Isoindolinongelb, Chinacridon, Benzimidazolon, Diketopyrrolopyrrolrot und deren Mischungen.

Was nun die Menge anbelangt, in welcher die Beschichtungszusammensetzung das Pigment enthält, so kann diese in weiten Bereichen variieren. Es hat sich im Rahmen der vorliegenden Erfindung jedoch bewährt, wenn die Beschichtungszusammensetzung das Pigment in Mengen von 0,1 bis 60 Gew.-%, insbesondere 1 bis 50 Gew.-%, vorzugsweise 3 bis 45 Gew.-%, bevorzugt 5 bis 40 Gew.-%, besonders bevorzugt 8 bis 35 Gew.-%, bezogen auf die Beschichtungszusammensetzung, aufweist.

Gleichermaßen kann es im Rahmen der vorliegenden Erfindung vorgesehen sein, dass die Beschichtungszusammensetzung das Pigment in Mengen von bis zu 60 Gew.-%, insbesondere bis zu 50 Gew.-%, vorzugsweise bis zu 45 Gew.-%, bevorzugt bis zu 40 Gew.-%, besonders bevorzugt 8 bis 35 Gew.-%, bezogen auf die Beschichtungszusammensetzung, aufweist.

Darüber hinaus ist es auch möglich, dass die Beschichtungszusammensetzung das Pigment in Mengen von mindestens 0,1 Gew.-%, insbesondere mindestens 1 Gew.-%, vorzugsweise mindestens 3 Gew.-%, bevorzugt mindestens 5 Gew.-%, besonders bevorzugt mindestens 8 Gew.-%, bezogen auf die Beschichtungszusammensetzung aufweist.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) Wasser, insbesondere in Mengen von 3 bis 60 Gew.-%, und
(c) mindestens ein Pigment, insbesondere in Mengen von 0,1 bis 60 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) ein weiteres, insbesondere organisches, Bindemittel, insbesondere in Mengen von 1 bis 30 Gew.-%
(c) Wasser, insbesondere in Mengen von 3 bis 60 Gew.-%, und
(d) mindestens ein Pigment, insbesondere in Mengen von 0,1 bis 60 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Im Rahmen der Erfindung kann es weiterhin vorgesehen sein, dass die Beschichtungszusammensetzung einen Füllstoff enthält.

Im Rahmen der vorliegenden Erfindung hat es sich bewährt, wenn der Füllstoff ausgewählt ist aus der Gruppe von Calciumcarbonat, Bariumsulfat, Glimmer, Talkum, Schichtsilikaten und deren Mischungen.

Wenn die Beschichtungszusammensetzung einen Füllstoff enthält, so ist es üblicherweise vorgesehen, dass die Beschichtungszusammensetzung den Füllstoff in Mengen von 0,1 bis 25 Gew.-%, insbesondere 1 bis 20 Gew.-%, vorzugsweise 3 bis 20 Gew.-%, bevorzugt 5 bis 15 Gew.-%, besonders bevorzugt 8 bis 15 Gew.-%, bezogen auf die Beschichtungszusammensetzung, aufweist.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) Wasser, insbesondere in Mengen von 3 bis 60 Gew.-%,
(c) mindestens ein Pigment, insbesondere in Mengen von 0,1 bis 60 Gew.-%, und
(d) mindestens einen Füllstoff, insbesondere in Mengen von 0,1 bis 25 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) ein weiteres, insbesondere organisches, Bindemittel, insbesondere in Mengen von 1 bis 30 Gew.-%
(c) Wasser, insbesondere in Mengen von 3 bis 60 Gew.-%,
(d) mindestens ein Pigment, insbesondere in Mengen von 0,1 bis 60 Gew.-%, und
(e) mindestens einen Füllstoff, insbesondere in Mengen von 0,1 bis 25 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Darüber hinaus ist es auch möglich, dass die Beschichtungszusammensetzung mindestens ein Additiv aufweist.

Wenn die Beschichtungszusammensetzung ein Additiv aufweist, so hat es sich bewährt, wenn die Beschichtungszusammensetzung das Additiv in Mengen von 0,1 bis 10 Gew.-%, insbesondere 0,2 bis 8 Gew.-%, vorzugsweise 0,3 bis 5 Gew.-%, bevorzugt 0,5 bis 2 Gew.-%, besonders bevorzugt 0,7 bis 1,5 Gew.-%, bezogen auf die Beschichtungszusammensetzung, aufweist.

Besonders gute Ergebnisse werden im Rahmen der vorliegenden Erfindung erhalten, wenn das Additiv ausgewählt ist aus der Gruppe von Verdickern, Rheologiestellmitteln, Netzmitteln, Konservierungsmitteln, Stabilisatoren, Säuren und/oder Basen, entschäumenden Komponenten, Filmbildnern, Verlaufsmitteln, UV-Absorbern, Füllstoffen, pH-Stabilisatoren, pH-Einstellmitteln und deren Mischungen.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) Wasser, insbesondere in Mengen von 3 bis 60 Gew.-%,
(c) mindestens ein Pigment, insbesondere in Mengen von 0,1 bis 60 Gew.-%,
(d) mindestens einen Füllstoff, insbesondere in Mengen von 0,1 bis 25 Gew.-%, und
(e) mindestens ein Additiv, insbesondere in Mengen von 0,1 bis 10 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) ein weiteres, insbesondere organisches, Bindemittel, insbesondere in Mengen von 1 bis 30 Gew.-%
(c) Wasser, insbesondere in Mengen von 3 bis 60 Gew.-%,
(d) mindestens ein Pigment, insbesondere in Mengen von 0,1 bis 60 Gew.-%,
(e) mindestens einen Füllstoff, insbesondere in Mengen von 0,1 bis 25 Gew.-%, und
(f) mindestens ein Additiv, insbesondere in Mengen von 0,1 bis 10 Gew.-%, jeweils bezogen auf die Beschichtungszusammensetzung, auf.

Darüber hinaus ist es auch möglich, dass die Beschichtungszusammensetzung mindestens ein weiteres Additiv aufweist.

Wenn die Beschichtungszusammensetzung ein weiteres Additiv aufweist, so hat es sich bewährt, wenn die Beschichtungszusammensetzung das Additiv in Mengen von 0,1 bis 10 Gew.-%, insbesondere 0,2 bis 8 Gew.-%, vorzugsweise 0,3 bis 5 Gew.-%, bevorzugt 0,5 bis 2 Gew.-%, besonders bevorzugt 0,7 bis 1,5 Gew.-%, bezogen auf die Beschichtungszusammensetzung, aufweist.

Besonders gute Ergebnisse werden im Rahmen der vorliegenden Erfindung erhalten, wenn das weitere Additiv ausgewählt ist aus der Gruppe von pharmazeutischen Wirkstoffen, Katalysatoren und deren Mischungen.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) Wasser, insbesondere in Mengen von 3 bis 60 Gew.-%,
(c) mindestens ein Pigment, insbesondere in Mengen von 0,1 bis 60 Gew.-%,
(d) mindestens einen Füllstoff, insbesondere in Mengen von 0,1 bis 25 Gew.-%, und
(e) mindestens ein Additiv, insbesondere in Mengen von 0,1 bis 10 Gew.-%, und
(f) mindestens ein weiteres Additiv, insbesondere in Mengen von 0,1 bis 10 Gew.-%, jeweils bezogen auf die Beschichtungszusammensetzung, auf.

Für diese Ausführungsform gelten alle Merkmale, Besonderheiten und Vorteile, die zuvor im Zusammenhang mit den weiteren Ausführungsformen beschrieben wurden, entsprechend.

Gemäß einer bevorzugten Ausführungsform der vorliegenden Erfindung ist es somit vorgesehen, dass die Beschichtungszusammensetzung
(a) ein silikatbasiertes Bindemittel, insbesondere in Mengen von 1 bis 40 Gew.-%,
(b) ein weiteres, insbesondere organisches, Bindemittel, insbesondere in Mengen von 1 bis 30 Gew.-%
(c) Wasser, insbesondere in Mengen von 3 bis 60 Gew.-%,
(d) mindestens ein Pigment, insbesondere in Mengen von 0,1 bis 60 Gew.-%,
(e) mindestens einen Füllstoff, insbesondere in Mengen von 0,1 bis 25 Gew.-%,
(f) mindestens ein Additiv, insbesondere in Mengen von 0,1 bis 10 Gew.-%, und
(g) mindestens ein weiteres Additiv, insbesondere in Mengen von 0,1 bis 10 Gew.-%,
jeweils bezogen auf die Beschichtungszusammensetzung, auf.

Darüber hinaus weist die Beschichtungszusammensetzung vorzugsweise nur geringe Mengen an organischen Lösemitteln und flüchtigen organischen Verbindungen (Volatile Organic Compounds, VOC) auf. Üblicherweise enthält die Beschichtungszusammensetzung organische Lösemittel und flüchtige organische Verbindungen in Mengen von weniger als 3 Gew.-%, insbesondere weniger als 1 Gew.-%, vorzugsweise weniger als 0,5 Gew.-%, bevorzugt weniger als 0,3 Gew.-%, besonders bevorzugt weniger als 0,1 Gew.-%, bezogen auf die Beschichtungszusammensetzung. Vorzugsweise ist die Beschichtungszusammensetzung frei von organischen Lösemitteln und flüchtigen organischen Verbindungen.

Was nun die Viskosität der erfindungsgemäßen Beschichtungszusammensetzung anbelangt, so kann diese in weiten Bereichen variieren. Besonders gute Ergebnisse werden im Rahmen der vorliegenden Erfindung jedoch erhalten, wenn die Beschichtungszusammensetzung eine dynamische Viskosität bei 20 °C nach Brookfield im Bereich von 2 bis 5.000 mPas, insbesondere 5 bis 1.000 mPas, vorzugsweise 5 bis 500 mPas, bevorzugt 10 bis 100 mPas, insbesondere bevorzugt 30 bis 50 mPas, aufweist. Die Viskosität kann dabei insbesondere gemäß ISO 2431 bestimmt werden.

Es zeigt die Figurendarstellung gemäß
- Fig. 1:: eine Aufnahme mit unterschiedlichen Wassergläsern beschichteter Objektträger unmittelbar nach dem Auftrag;
- Fig. 2:: eine Aufnahme mit unterschiedlichen Wassergläsern beschichteter Objektträger nach 24 Stunden;
- Fig. 3:: eine Aufnahme mit unterschiedlichen Wassergläsern beschichteter Objektträger nach 120 Stunden; und
- Fig. 4:: Aufnahmen mit erfindungsgemäße Beschichtungszusammensetzungen beschichteter Objektträger nach 5 Monaten.

Weiterer Gegenstand der vorliegenden Erfindung - gemäß einem **zweiten** Aspekt der vorliegenden Erfindung - ist eine Beschichtungszusammensetzung, aufweisend ein silanmodifiziertes Silikat, wobei die Beschichtungszusammensetzung als Feststoff vorliegt.

Die Beschichtungszusammensetzung ist insbesondere aus einer vorgenannten wässrigen Beschichtungszusammensetzung erhältlich.

Wie die Versuche der Anmelderin überraschenderweise ergeben haben, lässt sich die Beschichtungszusammensetzung durch Trocknen der erfindungsgemäßen Beschichtungszusammensetzung als redispergierbarer bzw. löslicher Feststoff erhalten.

Der Trocknungsvorgang erfolgt dabei insbesondere unter vermindertem Druck und/oder erhöhter Temperatur. Vorzugsweise erfolgt die Trocknung unter vermindertem Druck und erhöhter Temperatur.

Vorzugsweise wird die wässrige während der Trocknung durchmischt oder fein verteilt, insbesondere zerstäubt. Auf diese Weise wird die Ausbildung einer geschlossenen Schicht und nicht wieder redispergierbarer bzw. unlöslicher Polymere verhindert. Die Beschichtungszusammensetzung wird dann als Pulver erhalten und ist in Wasser redispergierbar bzw. löslich und kann wie die zuvor beschriebene wässrige Beschichtungszusammensetzung verarbeitet werden. Besonders gute Ergebnisse werden in diesem Zusammenhang erhalten, wenn die Beschichtungszusammensetzung durch Sprühtrocknen der wässrigen Beschichtungszusammensetzung erhalten.

Die Beschichtungszusammensetzung liegt vorzugsweise als pulverförmiger Feststoff vor.

Es hat sich bewährt, wenn die getrocknete Beschichtungszusammensetzung nur das silanmodifizierte Silikat und ggf. Additive enthält. Auf diese Weise ist die Redispergierbarkeit bzw. Löslichkeit in Wasser gegeben.

Für weitergehende Einzelheiten zu der erfindungsgemäßen Verwendung kann auf die obigen Ausführungen zu der erfindungsgemäßen wässrigen Beschichtungszusammensetzung verwiesen werden, welche in Bezug auf die Beschichtungszusammensetzung entsprechend gelten.

Weiterer Gegenstand der vorliegenden Erfindung - gemäß einem **dritten** Aspekt der vorliegenden Erfindung - ist die Verwendung einer vorgenannten Beschichtungszusammensetzung zur Herstellung einer Beschichtung für metallische, holzbasierte, insbesondere holzhaltige, und/oder mineralische Substrate, insbesondere als Holz- oder Bautenschutzfarbe.

Bevorzugt wird die Beschichtungszusammensetzung zur Herstellung einer Beschichtung für metallische Substrate, holzhaltige Substrate und/oder mineralische Substrate, vorzugsweise für holzhaltige Substrate und/oder mineralische Substrate, bevorzugt. als Holz- oder Bautenschutzfarbe vewendet.

Im Rahmen der vorliegenden Erfindung wird es insbesondere bevorzugt, wenn die Beschichtungszusammensetzung als Farbe oder Lack, insbesondere Korrosionsschutzfarbe, Innenfarbe, Fassadenfarbe, Bautenschutzfarbe oder Holzschutzfarbe verwendet wird. Vorzugsweise wird die Beschichtungszusammensetzung als Innenfarbe, Fassadenfarbe, Bautenschutzfarbe oder Holzschutzfarbe verwendet.

Die erfindungsgemäße Beschichtungszusammensetzung ermöglicht gegenüber bislang bekannten, insbesondere silikatbasierten Beschichtungszusammensetzungen ein tieferes Eindringen in das Substrat sowie eine verbesserte Haftung am Substrat.

Darüber hinaus weisen die erfindungsgemäßen Beschichtungszusammensetzungen bei Verwendung anorganisch-organischer Hybridbindemittel hervorragende Eigenschaften auf, da sie die Flexibilität, die Farbstärke und die Elastizität organischer Beschichtungen mit der Widerstandsfähigkeit und Beständigkeit anorganischer Beschichtungen kombinieren.

Für weitergehende Einzelheiten zu der erfindungsgemäßen Verwendung kann auf die obigen Ausführungen zu der erfindungsgemäßen Beschichtungszusammensetzung verwiesen werden, welche in Bezug auf die erfindungsgemäße Verwendung entsprechend gelten.

Weiterer Gegenstand der vorliegenden Erfindung - gemäß einem **vierten** Aspekt der vorliegenden Erfindung - ist die Verwendung einer zuvor genannten wässrigen oder getrockneten Beschichtungszusammensetzung zur Herstellung einer Beschichtung für kosmetische Zwecke und/oder für Medizinprodukte und/oder zur Gesundheitsvorsorge.

Die erfindungsgemäße Beschichtungszusammensetzung kann insbesondere für kosmetische und medizinische Anwendungen im Bereich der Haut, der Haare und der Zähne eingesetzt werden, beispielsweise in Cremes, Shampoos, Conditionern, Zahncremes etc. Mit der erfindungsgemäßen Beschichtungszusammensetzung lassen sich Produkte formulieren, die schützende Schichten auf der Haut, den Haaren oder den Zähnen bilden können und diese vor schädlichen Umwelteinflüssen schützen.

Die erfindungsgemäße Beschichtungszusammensetzung eignet sich insbesondere für die Herstellung von Zahngelen, insbesondere zur Versiegelung von Zähnen.

Des Weiteren kann die erfindungsgemäße Beschichtungszusammensetzung auch zur Beschichtung von Medizinprodukten, wie beispielsweise Implantaten oder auch Pflastern oder Wundauflagen eingesetzt werden. Die erfindungsgemäße Beschichtungszusammensetzung eignet sich in hervorragender Weise zur Immobilisierung von Wirkstoffen.

Für weitergehende Einzelheiten zu der erfindungsgemäßen Verwendung kann auf die obigen Ausführungen zu der erfindungsgemäßen Beschichtungszusammensetzung verwiesen werden, welche in Bezug auf die erfindungsgemäße Verwendung entsprechend gelten.

Weiterer Gegenstand der vorliegenden Erfindung - gemäß einem **fünften** Aspekt der vorliegenden Erfindung - ist die Verwendung einer zuvor genannten wässrigen oder getrockneten Beschichtungszusammensetzung zur Herstellung von Produkten, insbesondere Zusammensetzungen, für kosmetische und/oder medizinische Anwendungen.

Die erfindungsgemäße Beschichtungszusammensetzung eignet sich hevorragender Weise zur Herstellung von Cremes, Shampoos, Conditionern, Zahncremes und Zahngelen.

Für weitergehende Einzelheiten zu der erfindungsgemäßen Verwendung kann auf die obigen Ausführungen zu der erfindungsgemäßen Beschichtungszusammensetzung verwiesen werden, welche in Bezug auf die erfindungsgemäße Verwendung entsprechend gelten.

Weiterer Gegenstand der vorliegenden Erfindung - gemäß einem **sechsten** Aspekt der vorliegenden Erfindung - ist die Verwendung einer zuvor genannten wässrigen oder getrockneten Beschichtungszusammensetzung zur Beschichtung polarer anorganischer oder organischer Oberflächen, insbesondere cellulosehaltiger Materialien oder von Fasern, vorzugsweise von Textilien.

Unter einer polaren Oberfläche ist im Rahmen der vorliegenden Erfindung eine Oberfläche mit hoher Oberflächenenergie zu verstehen. Polare Oberflächen besitzen üblicherweise polare chemische Gruppen, wie beispielsweise Hydroxygruppen (-OH), Amingruppen (-NR₂), Thiolgruppen (-SH), Carbonsäuregruppen (RCOOH), Sulfonsäuregruppen, Phosphatgruppen, Sulfatgruppen, Nitrogruppen, Estergruppen, Amidgruppen und deren Mischungen.

Im Rahmen der vorliegenden Erfindung wird es bevorzugt, wenn die organische Oberfläche ausgewählt ist aus der Gruppe von Papier, Pappe, Karton, Fasern und deren Mischungen. Bei den Fasern handelt es sich insbesondere um Kunstfasern und/oder natürliche Fasern. Vorzugsweise sind die Fasern ausgewählt aus der Gruppe von Wollfasern, Hanffasern, Baumwollfasern, Flachsfasern, Holzfasern, Kunstfasern, insbesondere oberfächenbehandelten Kunstfasern, und deren Mischungen. Die Oberflächenbehandlung der Kunstfasern kann beispielsweise mittels Beflammung, Corona- oder Plasmabehandlung erfolgen.

Die Fasern liegen vorzugsweise in Form textiler Materialien vor, insbesondere als Gewebe, Gewirke, Gestricke oder Vlies.

Für weitergehende Einzelheiten zu der erfindungsgemäßen Verwendung kann auf die obigen Ausführungen zu der erfindungsgemäßen Beschichtungszusammensetzung verwiesen werden, welche in Bezug auf die erfindungsgemäße Verwendung entsprechend gelten.

Wiederum weiterer Gegenstand der vorliegenden Erfindung - gemäß einem **siebten** Aspekt der vorliegenden Erfindung - ist eine vorgenannte wässrige oder getrocknete Beschichtungszusammensetzung zur prophylaktischen Beschichtung von Zähnen oder zur Behandlung von Knochengewebe.

Wir zuvor bereits ausgeführt, eignet sich die erfindungsgemäße Beschichtungszusammensetzung in hervorragender Weise zur Beschichtung von Zähnen, wodurch deren Widerstandsfähigkeit gegen Karies gestärkt wird. Die erfindungsgemäße Beschichtungszusammensetzung kann dabei insbesondere in Form von Zahngelen bereitgestellt werden.

Darüber hinaus kann die Beschichtungszusammensetzung auch bei operativen Eingriffen an Knochengewebe eingesetzt werden, beispielsweise zur Behandlung und/oder Versiegelung des Übergangs von Knochengewebe zu Implantat oder Knochenzement oder zur Vorbehandlung von Implantaten oder Knochengewebe zur besseren Verbindung von Implantat, Knochengewebe und/oder Knochenzement.

Für weitergehende Einzelheiten zu der erfindungsgemäßen Verwendung kann auf die obigen Ausführungen zu der erfindungsgemäßen Beschichtungszusammensetzung verwiesen werden, welche in Bezug auf die erfindungsgemäße Beschichtungszusammensetzung entsprechend gelten

Wiederum weiterer Gegenstand der vorliegenden Erfindung - gemäß einem **achten** Aspekt der vorliegenden Erfindung - ist ein Verfahren zur Beschichtung eines Substrats, wobei eine zuvor beschriebene Beschichtungszusammensetzung auf ein Substrat aufgebracht und anschließend getrocknet wird.

Im Rahmen der vorliegenden Erfindung ist es üblicherweise vorgesehen, dass das Substrat ausgewählt ist aus Gruppe von holzhaltigen Werkstoffen, Holz, mineralischen Werkstoffen, Fasern, insbesondere Textilien, und deren Mischungen.

Bei mineralischen Werkstoffen kann es sich insbesondere um Stein, vorzugsweise Naturstein, Kalksandstein, Ziegel, Klinker, Beton, Mörtel, Putz, Faserzementplatten und ähnliche mineralische Werkstoffe handeln.

Unter einem Substrat ist im Rahmen der vorliegenden Erfindung jedes geeignete dreidimensionale Objekt und jede Oberfläche zu verstehen, auf welche die erfindungsgemäße Beschichtungszusammensetzung aufgebracht werden kann. Vorzugsweise handelt es sich bei dem Substrat jedoch um einen Gegenstand, insbesondere ein Bauteil, auf welche die Beschichtungszusammensetzung zumindest partiell aufgebracht wird.

Im Rahmen der vorliegenden Erfindung ist es üblicherweise vorgesehen, dass die Beschichtungszusammensetzung mit einer Schichtdicke im Bereich von 5 bis 300 µm, insbesondere 10 bis 200 µm, vorzugsweise 15 bis 150 µm, auf das Substrat aufgebracht wird.

Die Beschichtungszusammensetzung kann durch jedes geeignete Verfahren aufgebracht werden. Üblicherweise wird die Beschichtungszusammensetzung jedoch mittels Spritzen, Streichen, Rakeln, Walzen, Tauchen oder Tauchschleudern auf das Substrat aufgebracht. Besonders gute Ergebnisse werden im Rahmen der vorliegenden Erfindung jedoch erhalten, wenn die Beschichtungszusammensetzung mittels Streichen, Rakeln oder Walzen aufgebracht wird.

Üblicherweise wird die Beschichtungszusammensetzung nach Aufbringen auf das Substrat getrocknet. Die Temperatur, bei welcher die Beschichtungszusammensetzung getrocknet wird, kann in Abhängigkeit des gewählten Substrats in weiten Bereichen variieren.

Es hat sich jedoch als vorteilhaft erwiesen, wenn die Beschichtungszusammensetzung bei Temperaturen im Bereich von 10 bis 300 °C, insbesondere 10 bis 250 °C, vorzugsweise 12 bis 200 °C, bevorzugt 50 bis 180 °C, besonders bevorzugt 15 bis 60 °C, ganz besonders bevorzugt 15 bis 50 °C, getrocknet wird. Ganz besonders bevorzugt wird die Beschichtungszusammensetzung bei Temperaturen im Bereich von 10 bis 40 °C, vorzugsweise im Bereich von 20 bis 30 °C, getrocknet.

Gleichermaßen hat es sich als zweckmäßig erwiesen, wenn die Beschichtungszusammensetzung für einen Zeitraum von 1 Minute bis 30 Stunden, insbesondere 2 Minuten bis 20 Stunden, vorzugsweise 3 Minuten bis 18 Stunden, bevorzugt 5 Minuten bis 16 Stunden, getrocknet wird.

Im Rahmen der vorliegenden wird es bevorzugt, wenn die Beschichtungszusammensetzung in etwa bei Raumtemperatur, d.h. bei ca. 25 °C getrocknet wird, insbesondere bei Temperaturen im Bereich von 10 bis 40 °C, insbesondere 15 bis 35 °C, vorzugsweise 20 bis 30 °C. Die Trocknungsdauern liegen in diesem Fall üblicherweise im Bereich von 1 bis 30 Stunden, insbesondere 5 bis 20 Stunden, vorzugsweise 8 bis 16 Stunden.

Für weitergehende Einzelheiten zu dem erfindungsgemäßen Verfahren zur Beschichtung eines Substrats kann auf die vorherigen Ausführungen zu den übrigen Erfindungsaspekten verwiesen werden, welche im Hinblick auf das erfindungsgemäße Verfahren entsprechend gelten.

Darüber hinaus ist weiterer Gegenstand der vorliegenden Erfindung - gemäß einem **neunten** Aspekt der vorliegenden Erfindung - eine Beschichtung, erhältlich nach einem vorbeschriebenen Verfahren oder mit einer vorbeschriebenen Beschichtungszusammensetzung.

Im Rahmen der vorliegenden Erfindung ist es üblicherweise vorgesehen, dass die Beschichtung eine Schichtdicke im Bereich von 3 bis 250 µm, insbesondere 5 bis 200 µm, vorzugsweise 8 bis 150 µm, aufweist.

Was nun den Anteil an Pigmenten in der Beschichtung anbelangt, so kann dieser in weiten Bereichen variieren. Es hat sich jedoch im Rahmen der vorliegenden Erfindung bewährt, wenn die Beschichtung die Pigmente in Mengen von mehr als 40 Gew.-%, insbesondere mehr als 45 Gew.-%, vorzugsweise mehr als 50 Gew.-%, bevorzugt mehr als 55 Gew.-%, bezogen auf die Beschichtung, aufweist.

Gleichermaßen werden im Rahmen der vorliegenden Erfindung besonders gute Ergebnisse erhalten, wenn die Beschichtung die Pigmente in Mengen von 40 bis 90 Gew.-%, insbesondere 45 bis 85 Gew.-%, vorzugsweise 50 bis 85 Gew.-%, bevorzugt 55 bis 80 Gew.-%, bezogen auf die Beschichtung, aufweist.

Darüber hinaus ist es auch möglich, dass die Beschichtung das silikatbasierte Bindemittel in Mengen von 1 bis 30 Gew.-%, insbesondere 1 bis 25 Gew.-%, vorzugsweise 2 bis 20 Gew.-%, bevorzugt 3 bis 15 Gew.-%, bezogen auf die Beschichtung, aufweist.

Für weitergehende Einzelheiten zu der erfindungsgemäßen Beschichtung kann auf die vorhergehenden Ausführungen zu den übrigen Erfindungsaspekten verwiesen werden, welche in Bezug auf die erfindungsgemäße Beschichtung entsprechend gelten.

Schließlich ist weiterer Gegenstand der vorliegenden Erfindung - gemäß einem **zehnten** Aspekt der vorliegenden Erfindung - ein Verfahren zur Herstellung einer zuvor beschriebenen Beschichtungszusammensetzung, wobei mindestens ein Silan in Gegenwart mindestens eines Silikats bei einem pH-Wert gleich oder größer 8 hydrolysiert wird.

Üblicherweise ist es im Rahmen der Erfindung vorgesehen, dass mindestens ein Silan in Gegenwart mindestens eines Silikats bei einem pH-Wert gleich oder größer 8 hydrolysiert, insbesondere zumindest teilweise hydrolysiert, vorzugsweise vollständig hydrolysiert, und gegebenenfalls insbesondere zumindest teilweise kondensiert wird.

Vorzugsweise ist es dabei im Rahmen der vorliegenden Erfindung vorgesehen, dass der pH-Wert während des Hydrolysierens und ggf. des Kondensierens des Silans in Gegenwart mindestens eines Silikats gleich oder größer 9, vorzugsweise gleich oder größer 10, bevorzugt gleich oder größer 11, beträgt.

Die Hydrolyse und ggf Kondensation des Silans in Gegenwart des Silikats erfolgt bei Temperaturen im Bereich von 10 bis 50 °C, insbesondere 10 bis 40 °C, vorzugsweise 15 bis 35 °C, bevorzugt 20 bis 30 °C.

Die Hydrolyse und ggf Kondensation erfolgt üblicherweise durch langsame Zugabe, meist über mehrere Stunden, maximal bis zu 12 Stunden, des Silans oder Silangemisches zu dem Silikat, vorzugsweise unter ständiger Durchmischung.

Die Hydrolyse und ggf. Kondensation wird üblicherweise einen Zeitraum von 1 bis 60 Stunden, vorzugsweise 12 bis 48 Stunden, durchgeführt.

Was nun das mengenbezogene Verhältnis von Silan zu Silikat anbelangt, so hat es sich bewährt, wenn Silan und Silikat in einem Gewichtsverhältnis von Silan zu Silikat von 2 : 1 bis 1 : 10, insbesondere 1 : 1 bis 1 : 5, vorzugsweise 1 : 1 bis 1 : 3, bevorzugt 1 : 1 bis 1 : 2, eingesetzt werden.

Gemäß einer besonders bevorzugten Ausführungsform der vorliegenden Erfindung werden Silan und Silkat in einem mengenbezogenen Verhältnis von stoffmengenbezogenen Teilen Silan zu Gewichtsteilen Silikat, berechnet als Festoffgehalt des Silikats, d.h. Mol Silan : Gramm Silkat, von 0,009 (mol Silan) : 10 (g Silikat) bis 0,0045 (mol Silan) : 1 (g Silikat), insbesondere 0,0045 : 1 bis 0,0045 : 5, vorzugsweise 0,0045 : 1 bis 0,0045 : 3, bevorzugt 0,0045 : 1 bis 0,0045 : 2, eingesetzt.

Gemäß einer bevorzugten Ausführungsform der vorliegenden Erfindung ist es vorgesehen, dass nach dem Hydrolysieren und ggf. dem Kondensieren des Silans in Gegenwart mindestens eines Silikats der pH-Wert im Bereich von 1 bis 14, insbesondere 2 bis 11, vorzugsweise 4 bis 10, bevorzugt 5 bis 8, eingestellt wird.

Die pH-Werteinstellung erfolgt im Allgemeinen durch die Zugabe von Säure und vorzugsweise bei Temperaturen im Bereich von 10 bis 50 °C, insbesondere 10 bis 40 °C, vorzugsweise 15 bis 35 °C, bevorzugt 20 bis 30 °C.

Darüber hinaus kann es im Rahmen der vorliegenden Erfindung vorgesehen sein, dass nach dem Hydrolysieren und ggf. dem Kondensieren des Silans in Gegenwart mindestens eines Silikats flüchtige Bestandteile aus dem Reaktionsgemisch entfernt werden. Bei den flüchtigen Bestandteilen handelt es sich insbesondere um Alkohole, welche bei der Hydrolyse der Silane freigesetzt werden.

Gleichermaßen kann es auch vorgesehen sein, dass der Feststoffgehalt der Dispersion des silikatbasierten Bindemittels auf mindestens 10 Gew.-%, insbesondere mindestens 15 Gew.-%, vorzugsweise mindestens 20 Gew.-%, bezogen auf das silikatbasierte Bindemittel, eingestellt wird. Der Feststoffgehalt des silikatbasierten Bindemittels wird insbesondere in Halbfabrikaten auf die vorgenannten Werte eingestellt. Anschließend können dann Pigmente, Füllstoffe und Additive zugegeben und die Viskosität durch Zugabe von Wasser und/oder weiteren Additiven eingestellt werden.

Gemäß einer Ausführungsform der Erfindung wird das Verfahren zum Herstellen eines silanmodifizierten Silikats bzw. eines silanmodifizierten Wasserglases derart durchgeführt, dass eine Silan in Gegenwart einer Silikatverbindung bzw. eines Wasserglases bei einem pH-Wert gleich oder größer 8, insbesondere größer 11, zumindest teilweise hydrolysiert wird zu einem silanmodifizierten Silikat bzw. Wasserglas und anschließend der pH-Wert auf Werte kleiner 10, insbesondere kleiner 9, vorzugsweise im Bereich von 5 bis 9, eingestellt wird, insbesondere durch Zugabe von Säure.

Eine teilweise Hydrolyse von Silan und Silikat in wässriger alkalischer Lösung kann nach dem Ansäuern auf einen pH-Wert von 7 oder kleiner fortgesetzt werden, falls gewünscht bis hin zur vollständigen Hydrolyse.

Üblicherweise wird die Hydrolyse bzw. ggf. die Kondensation des Silans in Gegenwart des Silikats zu einer silanmodifizierten Silikatverbindung bzw. einem silanmodifizierten Wasserglas jedoch vollständig im Alkalischen durchgeführt.

Es ist auch möglich, beim Ansäuern einen pH-Wert zwischen 2 und 4 einzustellen, der erreicht und gehalten werden kann, ohne dass es zum Ausfällen oder Ausflocken der silanmodifizierten Silikatverbindung bzw. des silanmodifizierten Wasserglases kommt.

Nach Herstellung der silanmodifizierten Silikatverbindung bzw. des silanmodifizierten Wasserglases sowie der gegebenenfalls vorgenommenen Einstellung des Feststoffgehalts können die weiteren optionalen Bestandteile der Beschichtungszusammensetzung mit Hilfe üblicher Methoden zugegeben werden, um die anwendungsfertige Beschichtungszusammensetzung zu erhalten.

Für weitergehende Einzelheiten zu diesem erfindungsgemäßen Verfahren zur Beschichtung eines Substrats kann auf die vorherigen Ausführungen zu den weiteren Erfindungsaspekten verwiesen werden, welche im Hinblick auf das erfindungsgemäße Verfahren entsprechend gelten.

Der Gegenstand der vorliegenden Erfindung wird nachfolgend in nicht beschränkender Weise und rein exemplarisch anhand der Ausführungsbeispiele erläutert.

### Ausführungsbeispiele

### 1. Herstellung erfindungsgemäßer Bindemittelsysteme

Zur Herstellung der erfindungsgemäß eingesetzten Bindemittelsysteme werden Wassergläser vorgelegt und anschließend mit einem Silan versetzt. Die Mischung wird zur Hydrolyse und ggf. Kondensation der Silane zehn Stunden bei Raumtemperatur gerührt. Anschließend kann der pH-Wert der Mischung durch die Zugabe von Säuren gezielt eingestellt werden.

Der bei der Hydrolyse entstehende Alkohol wird in einem Rotationsverdampfer entfernt. In dem Rotationsverdampfer wird auch der Feststoffgehalt des resultierenden Gemischs auf ca. 50 % eingestellt.

Eine beispielhafte Liste von Materialkombinationen findet sich in der nachfolgenden Tabelle 1.

**Tabelle 1: Bindemittelmischungen (Wasserglas / Silan) zum Teil mit Veränderung des pH-Werts**

| | **Bindemittelsysteme** | | |
|---|---|---|---|
| **Bestandteile** | **1** [Gewichtsteile] | **2** [Gewichtsteile] | **3** [Gewichtsteile] |
| Lithiumpolysilikat¹ | 77,00 | - | - |
| Kaliumwasserglas² | - | 77,00 | 77,00 |
| DAMO³ | 23,00 | 23,00 | 23,00 |
| H₃PO₃/50 %ig | - | - | 19,00 |
| Summe | 100,00 | 100,00 | 119,00 |
| pH | 12 | 12 | 8,3 |

| | | | |
|---|---|---|---|
| ¹: Feststoffanteil 24 Gew.-% ²: Feststoffanteil 21 Gew.-% ³: 2-Aminomethyl-3-amino-propyltriethoxysilan | | | |

### 2. Vergleich der Carbonatisierung erfindungsgemäßer Zusammensetzungen und rein wasserglasbasierter Zusammensetzungen

In einer ersten Versuchsreihe werden 7 unterschiedliche Wasserglaslösungen in dünnen Schichten auf Objektträger aufgebracht und bei Umgebungsbedingungen trocknen gelassen. Der pH-Wert der Wasserglaslösungen liegt jeweils bei ca. 12.

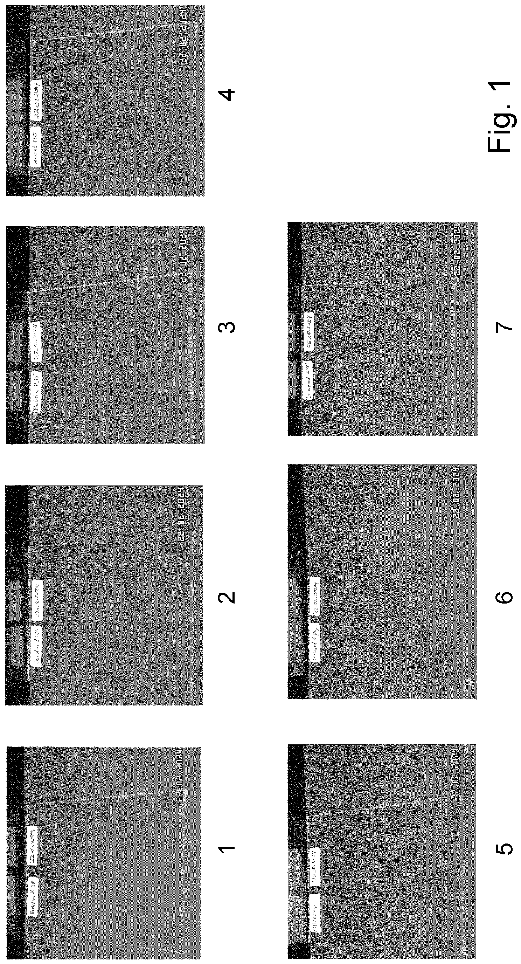

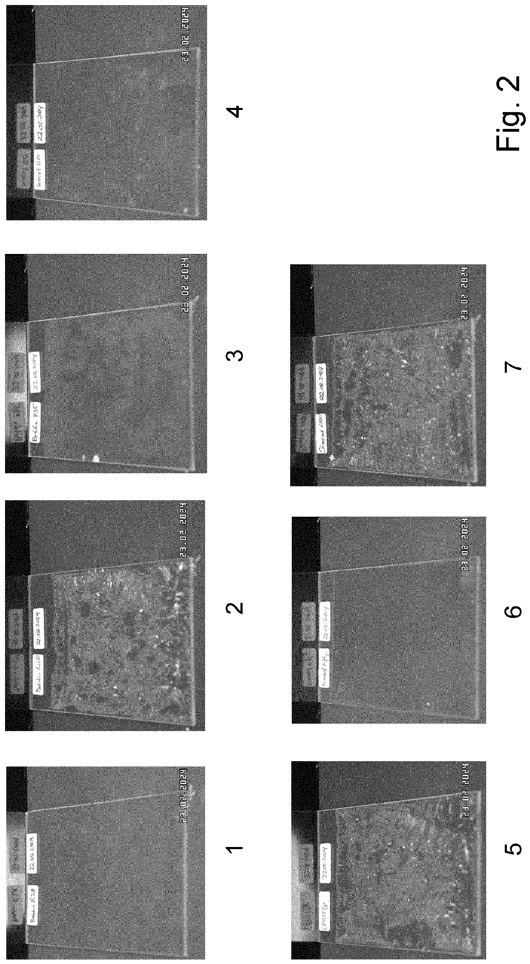

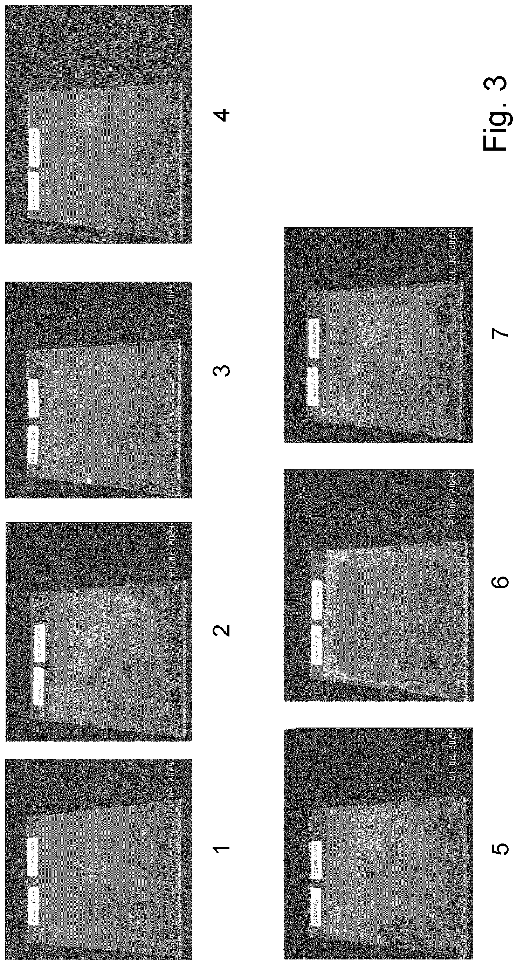

Von den beschichteten Objektträgern werden nach dem Auftrag, nach 24 Stunden und nach 120 Stunden fotografische Aufnahmen gemacht. Die Aufnahmen sind in Fig. 1 (nach dem Auftrag), Fig. 2 (nach 24 Stunden) und Fig. 3 (nach 120 Stunden) wiedergegeben.

Es wurden die in der nachfolgenden Tabelle 2 angegebenen Wasserglaslösungen eingesetzt.

**Tabelle 2: Verwendete Wasserglaslösungen**

| Versuchsreihe | Verbindung | Feststoffgehalt [Gew.-%] |
|---|---|---|
| 1 | Kaliumwasserglas | 28,7 |
| 2 | Lithiumpolysilikat | 22,2 |
| 3 | Kaliumwasserglas | 28,1 |
| 4 | Kaliumwasserglas | 20,3 |
| 5 | Lithiumpolysilikat | 23,5 |
| 6 | Kaliumwasserglas | 22,8 |
| 7 | Lithiumpolysilikat | nicht bekannt |

Es zeigt sich, dass die Beschichtungen aus Lithiumpolysilikat (Versuche 2, 5 und 7) bereits nach 24 Stunden (Fig. 2) brechen, was auf Spannungen innerhalb der Beschichtung zurückzuführen ist. Die Beschichtungen auf Basis der Kaliumwassergläser gemäß den Versuchen 1, 3 und 4 zeigen bereit graue erste Flecken, welche auf die Carbonatbildung zurückzuführen sind.

Nach 120 Stunden zeigen alle Versuche, wie Fig. 3 zu erkennen ist, eine starke Graufärbung auf, was für eine starke Carbonatbildung spricht.

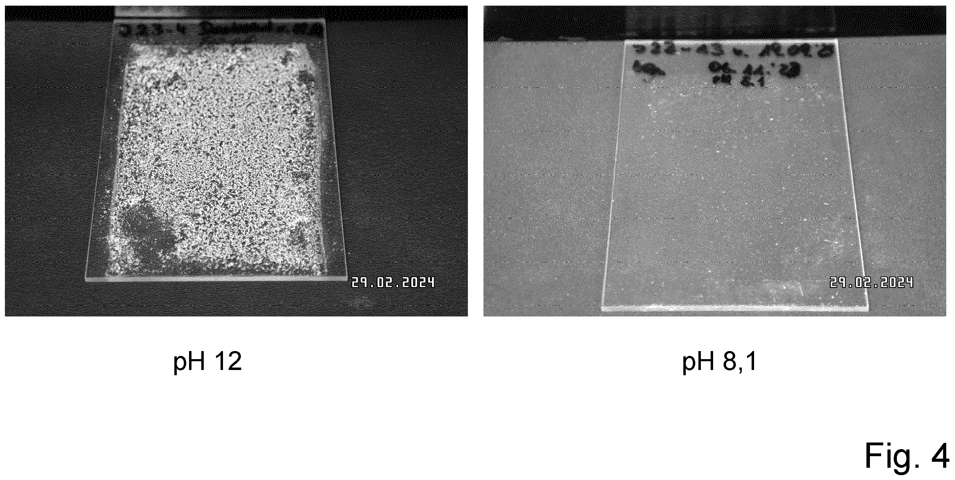

Zum Vergleich werden zwei erfindungsgemäße Beschichtungszusammensetzungen auf Objektträger aufgebracht und bei Umgebungsbedingungen trocknen gelassen. Die Beschichtungszusammensetzungen entsprechen den in Tabelle 1 angebenen Zusammensetzungen 2 und 3, wobei die Beschichtungszusammensetzung entsprechend Zusammensetzung 3 aus Tabelle 1 auf einen pH-Wert von 8,1 eingestellt wird. Nach 5 Monaten Lagerzeit werden fotografische Aufnahmen der beschichteten Objektträger angefertigt, welche in Fig. 4 wiedergegeben sind.

Die linke Aufnahme in Fig. 4 entspricht der Zusammensetzung 2 gemäß Tabelle 1 mit einem pH-Wert von 12 und zeigt eine starke Carbonatbildung, welche sogar zur teilweisen Zerstörung der Beschichtung führt. Die rechte Aufnahme in Fig. 4 entspricht Zusammensetzung 3 gemäß Tabelle 1 mit einem pH-Wert von 8,1 und zeigt keine Carbonatbildung und eine intakte Beschichtung. Mit dem erfindungsgemäßen Beschichtungssystem können somit silikathaltige Beschichtungszusammensetzungen erhalten werden, die im neutralen oder sauren pH-Bereich stabil sind und keiner Carbonatisierung unterliegen.

## Patentansprüche

1. Wässrige Beschichtungszusammensetzung, insbesondere für Holz- und Bautenschutzfarben,
**dadurch gekennzeichnet,**
**dass** die Beschichtungszusammensetzung ein silikatbasiertes Bindemittel aufweist, wobei das silikatbasierte Bindemittel ein silanmodifizertes Silikat enthält, wobei das silanmodifizierte Silikat durch Hydrolyse eines Silans in Gegenwart eines Silikats bei einem basischen pH-Wert erhalten wird.

2. Wässrige Beschichtungszusammensetzung nach Anspruch 1, **dadurch gekennzeichnet, dass** die Beschichtungszusammensetzung einen pH-Wert im Bereich von 1 bis 14, insbesondere 2 bis 11, vorzugsweise 4 bis 10, bevorzugt 5 bis 9, aufweist.

3. Wässrige Beschichtungszusammensetzung nach Anspruch 1 oder 2, **dadurch gekennzeichnet, dass** das Silikat des silanmodifizierten Silikats ein Wasserglas ist.

4. Wässrige Beschichtungszusammensetzung nach Anspruch 3, **dadurch gekennzeichnet, dass** das Wasserglas ausgewählt ist aus der Gruppe von Lithiumwasserglas, Natriumwasserglas, Kaliumwasserglas und deren Mischungen, vorzugsweise ausgewählt ist aus der Gruppe von Natriumwasserglas, Kaliumwasserglas und deren Mischungen.

5. Wässrige Beschichtungszusammensetzung nach einem der vorangehenden Ansprüche, **dadurch gekennzeichnet, dass** das Silan des silanmodifizierten Silikats ausgewählt ist aus der Gruppe von ein epoxyfunktionellen Silanen, phenoxyfunktionellen Silanen, vinylfunktionellen Silanen, aminofunktionellen Silanen und deren Mischungen.

6. Wässrige Beschichtungszusammensetzung nach einem der vorangehenden Ansprüche, **dadurch gekennzeichnet, dass** die Beschichtungszusammensetzung das silikatbasierte Bindemittel in Mengen von 1 bis 40 Gew.-%, insbesondere 1 bis 30 Gew.-%, vorzugsweise 2 bis 20 Gew.-%, bevorzugt 3 bis 15 Gew.-%, besonders bevorzugt 4 bis 10 Gew.-%, bezogen auf die Beschichtungszusammensetzung, aufweist.

7. Wässrige Beschichtungszusammensetzung nach einem der vorangehenden Ansprüche, **dadurch gekennzeichnet, dass** die Zusammensetzung mindestens ein weiteres Bindemittel aufweist.

8. Wässrige Beschichtungszusammensetzung nach Anspruch 7, **dadurch gekennzeichnet, dass** das weitere Bindemittel ein anorganisches und/oder ein organisches Bindemittel ist, vorzugsweise ein organisches Bindemittel ist.

9. Wässrige Beschichtungszusammensetzung nach Anspruch 7 oder 8, **dadurch gekennzeichnet, dass** weitere, insbesondere organische Bindemittel, ein organisches Polymer aufweist, vorzugsweise aus einem organischem Polymer besteht, wobei das organische Polmer ausgewählt ist aus der Gruppe von Acrylaten, Styrol-Acrylat-Copolymeren, Epoxiden, Alkyden, Polyurethanen, Polyvinylacetat, Polyvinylalkohol, Ethylcellulose, Carboxymethylcellulose, Polyvinylpyrrolidon, Polyvinylbutyral und deren Mischungen und Copolymeren.

10. Wässrige Beschichungszusammensetzung nach einem der Ansprüche 7 bis 9, **dadurch gekennzeichnet, dass** die Beschichtungszusammensetzung das weitere Bindemittel in Mengen von 1 bis 30 Gew.-%, insbesondere 1 bis 20 Gew.-%, vorzugsweise 2 bis 15 Gew.-%, bevorzugt 3 bis 10 Gew.-%, besonders bevorzugt 3 bis 8 Gew.-%, bezogen auf die Beschichtungszusammensetzung, aufweist.

11. Wässrige Beschichtungszusammensetzung nach einem der vorangehenden Ansprüche, **dadurch gekennzeichnet, dass** die Beschichtungszusammensetzung mindestens ein Pigment aufweist.

12. Wässrige Beschichtungszusammensetzung nach Anspruch 11, dadurch gekennezeichnet, dass die Beschichtungszusammensetzung das Pigment in Mengen von 0,1 bis 60 Gew.-%, insbesondere 1 bis 50 Gew.-%, vorzugsweise 3 bis 45 Gew.-%, bevorzugt 5 bis 40 Gew.-%, besonders bevorzugt 8 bis 35 Gew.-%, bezogen auf die Beschichtungszusammensetzung, aufweist.

13. Beschichtungszusammensetzung, aufweisend ein silanmodifiziertes Silikat, **dadurch gekennzeichnet, dass** die Beschichtungszusammensetzung als Feststoff vorliegt, insbesondere erhältlich aus einer wässrigen Beschichtungszusammensetzung nach einem der Ansprüche 1 bis 12.

14. Verwendung einer Beschichtungszusammensetzung nach einem der Ansprüche 1 bis 12 oder 13 zur Herstellung einer Beschichtung für metallische Substrate, holzbasierte Substrate, insbesondere holzhaltige Substrate, und/oder mineralische Substrate, insbesondere als Holz- oder Bautenschutzfarbe.

15. Verwendung einer Beschichtungszusammensetzung nach einem der Ansprüche 1 bis 12 oder 13 zur Herstellung einer Beschichtung für kosmetische Zwecke und/oder für Medizinprodukte und/oder zur Gesundheitsvorsorge.

16. Verwendung einer Beschichtungszusammensetzung nach einem der Ansprüche 1 bis 12 oder 13 zur Herstellung von Produkten, insbesondere Zusammensetzungen, für kosmetische und/oder medizinische Anwendungen.

17. Verwendung einer Beschichtungszusammensetzung nach einem der Ansprüche 1 bis 12 oder 13 zur Beschichtung polarer anorganischer oder organischer Oberflächen, insbesondere cellulosehaltiger Materialien oder Fasern.

18. Beschichtungszusammensetzung nach einem der Ansprüche 1 bis 12 oder 13 zur prophylaktischen Beschichtung von Zähnen oder zur Behandlung von Knochengewebe.

19. Verfahren zur Beschichtung eines Substrats, **dadurch gekennzeichnet, dass** eine Beschichtungszusammensetzung nach einem der Ansprüche 1 bis 12 auf ein Substrat aufgebracht und anschließend getrocknet wird.

20. Verfahren nach Anspruch 19, **dadurch gekennzeichnet, dass** das Substrat ein metallisches Substrat, ein holzbasiertes Substrat, insbesondere ein holzhaltiges, Substrat und/oder ein mineralisches Substrat ist.

21. Beschichtung, erhältlich nach einem Verfahren nach einem der Ansprüche 19 oder 20 oder mit einer Beschichtungszusammensetzung nach einem der Ansprüche 1 bis 12.

22. Verfahren zur Herstellung einer Beschichtungszusammensetzung nach einem der Ansprüche 1 bis 12, **dadurch gekennzeichnet, dass** mindestens ein Silan in Gegenwart mindestens eines Silikats bei einem pH-Wert gleich oder größer 8 hydrolysiert.
